# FASCICULE DE BREVET EUROPEEN

(11) **EP 1 866 889 B1**
(45) Date de publication et mention de la délivrance du brevet: **24.02.2010**
(21) Numéro de dépôt: 06743604.8
(22) Date de dépôt: 28.03.2006
(51) Int. Cl.: G08G 5/06, G01C 23/00, G06T 11/60

(54) **PROCEDE ET DISPOSITIF D'AFFICHAGE D'UNE PARTIE D'UN AEROPORT SUR UN ECRAN DE VISUALISATION**
VERFAHREN UND VORRICHTUNG ZUR ANZEIGE EINES TEILS EINES FLUGHAFENS AUF EINEM BILDSCHIRM
METHOD AND DEVICE FOR DISPLAYING PART OF AN AIRPORT ON A VIEWING SCREEN

(30) Priorité: 04.04.2005 FR 0503268
(43) Date de publication de la demande: 19.12.2007
(73) Titulaire: AIRBUS OPERATIONS (SAS), 31060 Toulouse (FR)
(72) Inventeur: FETZMANN, Fabien, F-31270 Cugnaux (FR); COLDEFY, Pierre, F-31300 Toulouse (FR); COLLINS, Stéphane, 31330 Grenade (FR)
(74) Mandataire: Hauer, Bernard
(86) Numéro de dépôt international: PCT/FR2006/000665
(87) Numéro de publication internationale: WO 2006/106206

(56) Documents cités:
- WO-A-01/71485
- WO-A-02/29726
- WO-A-03/071228
- US-B1- 6 565 610

## Description

La présente invention concerne un procédé et un dispositif d'affichage d'au moins une partie d'un aéroport comprenant une pluralité d'éléments sur un champ d'affichage d'un écran de visualisation.

Bien que non exclusivement, ledit écran de visualisation est situé plus particulièrement dans le poste de pilotage d'un avion roulant sur l'aéroport, et il est destiné à aider le pilote dudit avion lors de la navigation aéroportuaire. Les éléments susceptibles d'être affichés sur l'écran de visualisation concernent notamment les différentes voies de roulement de l'aéroport, telles que les pistes, les taxiways ou les bretelles d'accès. Bien entendu, il peut également s'agir d'autres éléments tels que des bâtiments par exemple.

Par exemple, les documents WO 03/071 228 et WO 01/71 485 font partie de l'état de la technique.

Selon l'invention, ledit procédé d'affichage d'au moins une partie d'un aéroport (comprenant une pluralité d'éléments) sur un champ d'affichage d'un écran de visualisation, est remarquable en ce que l'on réalise, de façon automatique et répétitive, la suite d'étapes successives suivante :
a) on recherche l'ensemble des éléments de l'aéroport qui sont affichés sur ledit champ d'affichage de l'écran de visualisation ;
b) pour chacun des éléments trouvés à l'étape a), on vérifie s'il fait partie :
   - d'un premier groupe pour lequel un point d'ancrage principal, associé à l'élément et situé sur ce dernier, se trouve à l'intérieur d'une zone d'étiquette qui est définie à l'intérieur dudit champ d'affichage de l'écran de visualisation ; ou
   - d'un second groupe, pour lequel le point d'ancrage principal associé est situé hors de ladite zone d'étiquette ;
c) pour tous les éléments du second groupe, on détermine à chaque fois un point d'ancrage auxiliaire qui est situé au point d'intersection entre un axe central dudit élément et ladite zone d'étiquette ; et
d) pour chacun des éléments trouvés à l'étape a), on présente sur ledit champ d'affichage de l'écran de visualisation une étiquette associée qui comporte des informations relatives audit élément, les étiquettes associées auxdits éléments du premier groupe étant situées au point d'ancrage principal correspondant, et les étiquettes associées auxdits éléments du second groupe étant situées au point d'ancrage auxiliaire correspondant.

Ainsi, grâce à l'invention, chaque élément de l'aéroport qui est situé dans le champ d'affichage de l'écran de visualisation, c'est-à-dire qui est effectivement affiché, est muni d'une étiquette qui comporte des informations relatives audit élément, par exemple le nom de cet élément, ce qui permet de rendre particulièrement lisible et compréhensible l'affichage réalisé sur ledit écran de visualisation. De préférence, ledit écran de visualisation est un écran d'un poste de pilotage d'un avion et permet donc d'aider le pilote à se repérer facilement sur l'aéroport, lors du roulage au sol dudit avion. Toutefois, ledit écran de visualisation peut également être à la disposition d'autres opérateurs, et en particulier être monté sur tout type de véhicule destiné à rouler sur l'aéroport, tel qu'un véhicule d'intervention ou de maintenance par exemple.

De plus, grâce à l'invention, pour chaque élément affiché :
- l'étiquette est située au point d'ancrage principal, si ce dernier se trouve à l'intérieur de la zone d'étiquette qui est définie à l'intérieur du champ d'affichage de l'écran de visualisation, et de préférence à proximité des bords dudit champ d'affichage. En outre, ledit point d'ancrage principal est situé, de préférence, au centre de l'élément correspondant ; et
- si le point d'ancrage principal ne se trouve pas à l'intérieur de ladite zone d'étiquette, l'étiquette est située à un point d'ancrage auxiliaire qui est positionné sur la zone d'étiquette, c'est-à-dire à la périphérie du champ d'affichage.

Ces caractéristiques permettent, d'une part, de toujours présenter une étiquette pour chaque élément affiché, même si le point d'ancrage principal correspondant est situé hors de la zone d'étiquette et, d'autre part, de ne pas trop surcharger le champ d'affichage, puisque les étiquettes des éléments du second groupe sont situées sur la zone d'étiquette qui est définie de préférence à la périphérie du champ d'affichage (à l'intérieur de ce dernier).

On notera que, lors du déplacement de la partie de l'aéroport qui est affichée et donc du déplacement desdits éléments sur le champ d'affichage, chaque étiquette relative à un élément du second groupe se déplace le long de cet élément, en restant sur les bords de la zone d'étiquette, et ceci jusqu'à ce que le point d'ancrage principal entre dans ladite zone d'étiquette. A partir de cet instant, l'étiquette s'attache audit point d'ancrage principal, et ceci aussi longtemps que ce dernier reste à l'intérieur de ladite zone d'étiquette dudit écran de visualisation.

De façon avantageuse, en cas de double intersection entre l'axe central d'un élément et la zone d'étiquette, on détermine comme point d'ancrage auxiliaire le point d'intersection qui est situé le plus près longitudinalement du centre dudit élément, c'est-à-dire qui est situé le plus près du point d'ancrage principal.

En outre, avantageusement, si l'angle entre l'axe central d'un élément et l'horizontale est supérieur à une valeur prédéterminée, par exemple 80°, on supprime la présentation de l'étiquette correspondante à l'étape d). De plus, de façon avantageuse, à ladite étape d), on présente chaque étiquette horizontalement.

La présente invention concerne également un dispositif d'affichage d'au moins une partie d'un aéroport (comprenant une pluralité d'éléments) sur un champ d'affichage d'un écran de visualisation.

Selon l'invention, ledit dispositif est remarquable en ce qu'il comporte :
- des premiers moyens pour rechercher l'ensemble des éléments de l'aéroport qui sont affichés sur ledit champ d'affichage de l'écran de visualisation ;
- des deuxièmes moyens pour vérifier, pour chacun des éléments trouvés par lesdits premiers moyens, s'il fait partie :
   ■ d'un premier groupe pour lequel un point d'ancrage principal, associé à l'élément et situé sur ce dernier, se trouve à l'intérieur d'une zone d'étiquette qui est définie à l'intérieur dudit champ d'affichage de l'écran de visualisation ; ou
   ■ d'un second groupe, pour lequel le point d'ancrage principal associé est situé hors de ladite zone d'étiquette ;
- des troisièmes moyens pour déterminer, pour tous les éléments du second groupe, à chaque fois un point d'ancrage auxiliaire qui est situé au point d'intersection entre un axe central dudit élément et ladite zone d'étiquette ; et
- des quatrièmes moyens pour présenter, sur ledit champ d'affichage de l'écran de visualisation, une étiquette associée qui comporte des informations relatives audit élément, les étiquettes associées auxdits éléments du premier groupe étant situées au point d'ancrage principal correspondant, et les étiquettes associées auxdits éléments du second groupe étant situées au point d'ancrage auxiliaire correspondant.

Dans un mode de réalisation particulier, ledit dispositif comporte, de plus, un moyen pour désactiver la présentation d'une étiquette associée à un élément, présentation qui est mise en oeuvre par lesdits quatrièmes moyens, lorsque l'angle entre l'axe central dudit élément et l'horizontale est supérieur à une valeur prédéterminée.

La présente invention concerne également un système d'affichage du type comportant :
- une base de données cartographiques de l'aéroport ;
- des moyens d'actionnement permettant à un opérateur de commander une pluralité de fonctions dudit système d'affichage ; et
- un dispositif d'affichage susceptible d'afficher au moins une partie de l'aéroport sur un écran de visualisation.

Selon l'invention, ce système d'affichage est remarquable en ce que ledit dispositif d'affichage est du type de celui précisé ci-dessus.

Les figures du dessin annexé feront bien comprendre comment l'invention peut être réalisée. Sur ces figures, des références identiques désignent des éléments semblables.

La figure 1 est le schéma synoptique d'un dispositif d'affichage conforme à l'invention.

Les figures 2 à 5 illustrent schématiquement divers exemples d'affichage, qui permettent de bien mettre en évidence les caractéristiques essentielles de la présente invention.

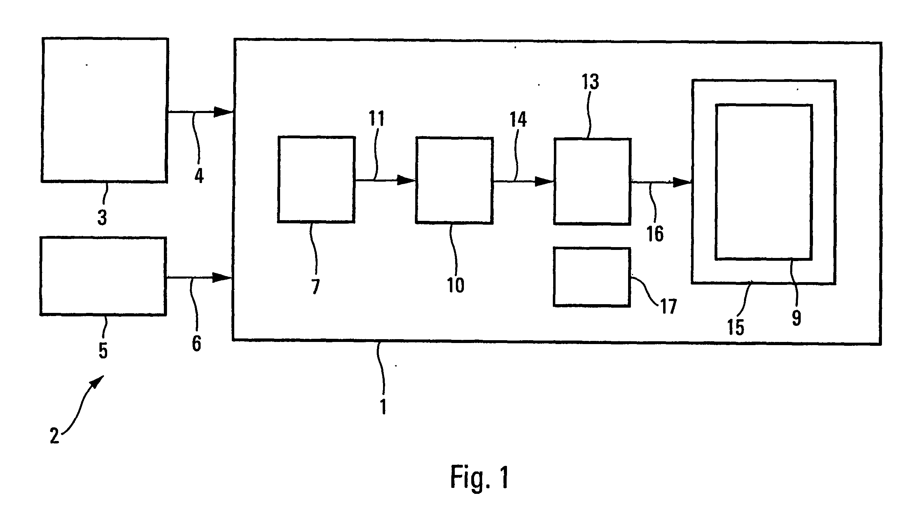

Le dispositif 1 conforme à l'invention et représenté schématiquement sur la figure 1 est un dispositif d'affichage d'au moins une partie d'un aéroport qui comprend une pluralité d'éléments Ei (i étant un entier), en particulier des voies de roulement (par exemple des pistes, des taxiways, des bretelles d'accès, ...) ou des bâtiments de l'aéroport.

Ce dispositif d'affichage 1 peut faire partie d'un système d'affichage 2, de type usuel, qui comporte de plus :
- une base de données 3 qui contient des données cartographiques, de type numérique, dudit aéroport et qui est reliée par une liaison 4 audit dispositif d'affichage 1 ; et
- des moyens d'actionnement 5 usuels, qui sont reliés par une liaison 6 audit dispositif d'affichage 1 et qui permettent à un opérateur de commander une pluralité de fonctions usuelles (mise en marche/arrêt, zoom, ...) dudit système d'affichage 2.

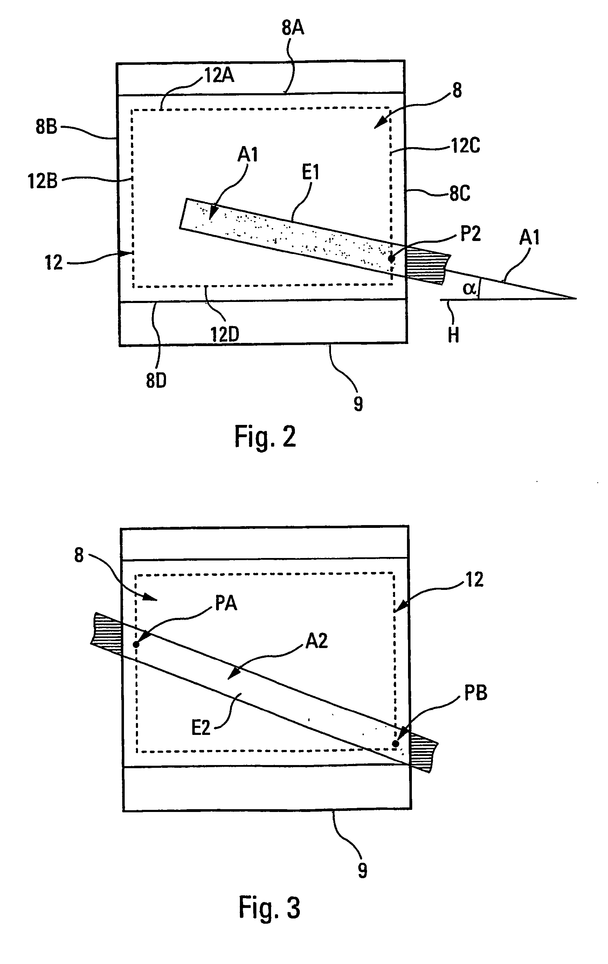

Selon l'invention, ledit dispositif d'affichage 1 comporte :
- des moyens 7 pour identifier l'ensemble des éléments Ei de l'aéroport, qui sont affichés à l'instant courant sur le champ d'affichage 8 (limité par des bords 8A, 8B, 8C, 8D sur la figure 2) d'un écran de visualisation 9 dudit dispositif d'affichage 1, c'est-à-dire l'ensemble des éléments Ei qui se trouvent dans la partie d'aéroport effectivement affichée sur ledit champ d'affichage 8 ;
- des moyens 10 qui sont reliés par une liaison 11 auxdits moyens 7, pour vérifier, pour chacun des éléments Ei trouvés par lesdits moyens 7, s'il fait partie :
   ■ d'un premier groupe G1 pour lequel un point d'ancrage principal P1 précisé ci-dessous, qui est associé à l'élément Ei et qui est situé sur ce dernier, se trouve à l'intérieur d'une zone d'étiquette 12 précisée ci-après, qui est définie à l'intérieur dudit champ d'affichage 8 de l'écran de visualisation 9 ; ou
   ■ d'un second groupe G2 pour lequel le point d'ancrage principal P1 associé audit élément Ei est situé hors de ladite zone d'étiquette 12;
- des moyens 13 qui sont reliés par une liaison 14 auxdits moyens 10, pour déterminer, pour tous les éléments Ei dudit second groupe G2, à chaque fois un point d'ancrage auxiliaire P2 qui est situé au point d'intersection entre un axe central Ai dudit élément Ei et ladite zone d'étiquette 12. Sur la figure 2, le point d'ancrage auxiliaire P2 est situé à l'intersection de l'axe central A1 de l'élément E1 et d'un bord 12C de la zone d'étiquette 12 ; et
- des moyens 15 qui sont reliés par une liaison 16 auxdits moyens 13, pour présenter sur ledit champ d'affichage 8 de l'écran de visualisation 9, pour chaque élément Ei trouvé par les moyens 7, une étiquette Li associée, qui comporte des informations relatives à l'élément Ei correspondant et qui est, de préférence, affichée horizontalement quelle que soit l'orientation dudit élément Ei.

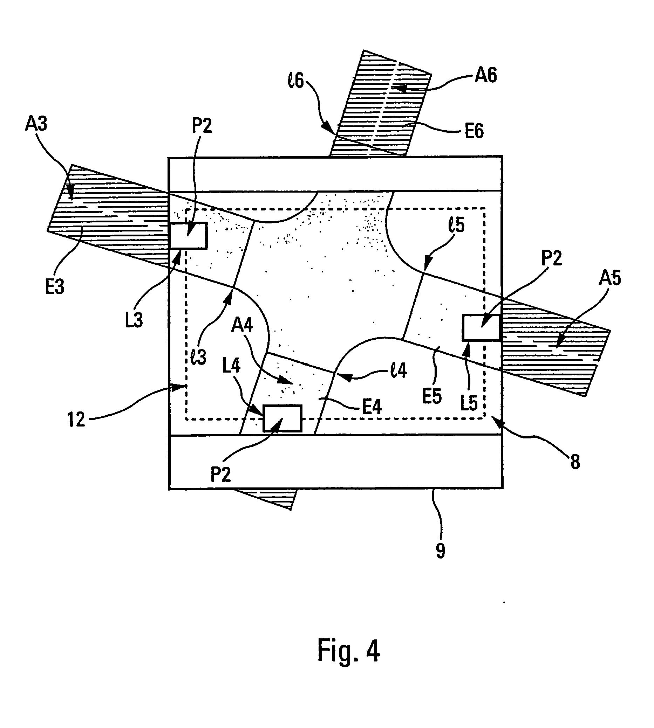

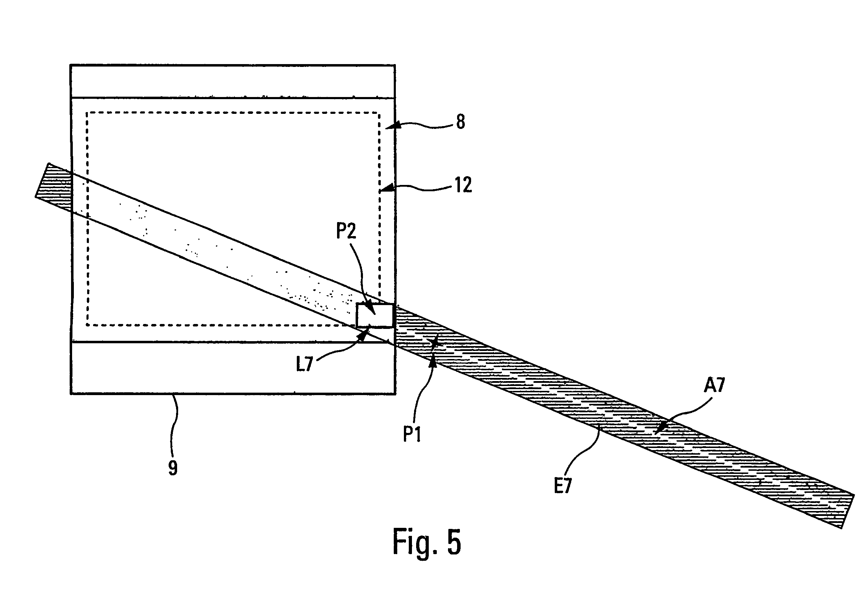

Selon l'invention, les étiquettes Li associées aux éléments Ei du premier groupe G1 sont situées au point d'ancrage principal P1 correspondant, et les étiquettes Li associées aux éléments Ei du second groupe G2 sont situées au point d'ancrage auxiliaire P2 correspondant, comme représenté par exemple sur les figures 4 et 5 pour les étiquettes L3, L4, L5 et L7.

Ainsi, grâce au dispositif d'affichage 1 conforme à l'invention, chaque élément Ei de l'aéroport qui est situé dans le champ d'affichage 8 (ou en variante, dans la zone d'étiquette 12) de l'écran de visualisation 9, c'est-à-dire qui est effectivement affiché, est muni d'une étiquette Li qui comporte des informations relatives audit élément Ei, par exemple le nom de cet élément Ei, ce qui permet de rendre particulièrement lisible et compréhensible l'affichage réalisé sur ledit écran de visualisation 9, puisque chaque élément E1 affiché peut ainsi être facilement identifié.

Dans un mode de réalisation préféré, ledit écran de visualisation 9 est un écran d'un poste de pilotage d'un avion et permet ainsi d'aider le pilote à se repérer (facilement) sur l'aéroport, lors du roulage au sol dudit avion. Toutefois, ledit écran de visualisation 9 peut également être à la disposition d'autres opérateurs, et en particulier être monté sur tout type de véhicule destiné à rouler sur l'aéroport, notamment un véhicule d'intervention ou un véhicule de maintenance.

En outre, comme indiqué précédemment :
- une étiquette Li est située au point d'ancrage principal P1 si ce dernier se trouve à l'intérieur de la zone d'étiquette 12. Cette dernière est définie à l'intérieur du champ d'affichage 8, à proximité de ses bords 8A, 8B, 8C et 8D, et de préférence de sorte que les distances entre les bords 12A, 12B, 12C et 12D de la zone d'étiquette 12 et les bords 8A, 8B, 8C et 8D opposés du champ d'affichage 8 correspondent à des distances identiques, de faible valeur. En outre, selon l'invention, le point d'ancrage principal P1 est situé, de préférence, au centre de l'élément Ei correspondant, comme représenté par exemple sur la figure 5 pour un élément E7 ; et
- si le point d'ancrage principal P1 ne se trouve pas à l'intérieur de ladite zone d'étiquette 12, l'étiquette Li est située sur un point d'ancrage auxiliaire P2 qui est positionné sur la zone d'étiquette 12, c'est-à-dire en périphérie interne de la zone d'affichage 8.

Ces dernières caractéristiques permettent :
- d'une part, de toujours présenter une étiquette Li pour chaque élément Ei affiché, même si le point d'ancrage principal P1 correspondant est situé hors de la zone d'étiquette 12 ;et
- d'autre part, de ne pas trop surcharger le champ d'affichage 8, puisque les étiquettes Li des éléments du second groupe G2 sont situées sur la zone d'étiquette 12 qui est définie de préférence à la périphérie du champ d'affichage 8 (à l'intérieur de ce dernier), ce qui libère la partie centrale du champ d'affichage 8.

Comme indiqué précédemment, la figure 2 illustre la détermination d'un point d'ancrage auxiliaire P2 qui est situé à l'intersection entre l'axe central Ail de l'élément E1 (trouvé par les moyens 7) et le bord 12C de la zone d'étiquette 12. Dans cet exemple, le point d'ancrage principal (non représenté) est situé hors de la zone d'étiquette 12. L'étiquette (également non représentée) qui est associée à cet élément E1 de l'aéroport sera donc positionnée audit point d'ancrage auxiliaire P2.

Sur les figures 2 à 4, on a représenté pour des raisons de clarté :
- par des hachures horizontales, les parties des éléments Ei qui sont situées hors du champ d'affichage 8 et qui ne sont donc pas affichées en réalité ; et
- par des surfaces grises, les parties des éléments Ei qui se trouvent à l'intérieur du champ d'affichage 8 et qui sont donc effectivement visualisées à l'instant courant sur l'écran de visualisation 9.

Lors de la détermination d'un point d'ancrage auxiliaire P2, en cas de double intersection entre l'axe central A2 d'un élément E2 et la zone d'étiquette 12, comme représenté sur la figure 3, le point d'ancrage auxiliaire P2 correspond au point d'intersection PA, PB qui est situé le plus près longitudinalement du centre dudit élément E2, c'est-à-dire qui est situé le plus près du point d'ancrage principal P1 (non représenté) de cet élément E2.

Dans l'exemple de la figure 4, on considère quatre éléments E3, E4, E5 et E6 de l'aéroport qui débutent respectivement à des extrémités ℓ3, ℓ4, ℓ5 et ℓ6. Or, seuls les éléments E3, E4 et E5 sont situés à l'intérieur de la zone d'étiquette 12 et du champ d'affichage 8, l'élément E6 étant complètement hors dudit champ d'affichage 8, de sorte que seules les étiquettes L3, L4 et L5 sont affichées, respectivement à chaque fois au point d'ancrage auxiliaire P2 correspondant.

On notera que selon l'invention, lors du déplacement de la partie de l'aéroport qui est affichée et donc du déplacement des éléments Ei sur le champ d'affichage 8, chaque étiquette Li associée à un élément Ei du second groupe G2 (comme l'étiquette L7 qui est associée à l'élément E7 sur la figure 5) se déplace le long de cet élément Ei, en restant sur les bords de la zone d'étiquette 12, et ceci jusqu'à ce que le point d'ancrage principal P1 entre dans ladite zone d'étiquette 12. A partir de cet instant, l'étiquette Li s'attache audit point d'ancrage principal P1 et le suit, ceci aussi longtemps que ce dernier se trouve à l'intérieur de ladite zone d'étiquette 12.

Par ailleurs, selon l'invention, le système d'affichage 1 comporte, de plus, un moyen 17 qui est formé de manière :
- à comparer l'angle α entre l'axe central Ai d'un élément Ei et l'horizontale H, comme représenté sur la figure 2 pour l'axe central A1, à une valeur limite prédéterminée, par exemple 80° ; et
- à désactiver la présentation de l'étiquette correspondante, qui est mise en oeuvre par lesdits moyens 15, lorsque ledit angle α est (ou devient) supérieur à ladite valeur prédéterminée.

## Revendications

1. Procédé d'affichage d'au moins une partie d'un aéroport comprenant une pluralité d'éléments (E1 à E7) sur un champ d'affichage (8) d'un écran de visualisation (9), procédé selon lequel on réalise, de façon automatique et répétitive, la suite d'étapes successives suivante :
a) on recherche l'ensemble des éléments (E1 à E5, E7) de l'aéroport qui sont affichés sur ledit champ d'affichage (8) de l'écran de visualisation (9) ;
b) pour chacun des éléments (E1 à E5, E7) trouvés à l'étape a), on vérifie s'il fait partie :
- d'un premier groupe pour lequel un point d'ancrage principal (P1), associé à l'élément et situé sur ce dernier, se trouve à l'intérieur d'une zone d'étiquette (12) qui est définie à l'intérieur dudit champ d'affichage (8) de l'écran de visualisation (9) ; ou
- d'un second groupe, pour lequel le point d'ancrage principal (P1) associé est situé hors de ladite zone d'étiquette (12) ;
c) pour tous les éléments (E1 à E5, E7) du second groupe, on détermine à chaque fois un point d'ancrage auxiliaire (P2) qui est situé au point d'intersection entre un axe central (A1 à A5, A7) dudit élément (E1 à E5, E7) et ladite zone d'étiquette (12) ; et
d) pour chacun des éléments (E1 à E5, E7) trouvés à l'étape a), on présente sur ledit champ d'affichage (8) de l'écran de visualisation (9) une étiquette (L3 à L5, L7) associée qui comporte des informations relatives audit élément, les étiquettes associées auxdits éléments du premier groupe étant situées au point d'ancrage principal (P1) correspondant, et les étiquettes (L3 à L5, L7) associées auxdits éléments (E1 à E5, E7) du second groupe étant situées au point d'ancrage auxiliaire (P2) correspondant,
procédé selon lequel, de plus, si l'angle (α) entre l'axe central (A1) d'un élément (E1) et l'horizontale (H) est supérieur à une valeur prédéterminée, on supprime la présentation de l'étiquette correspondante à l'étape d).

2. Procédé selon la revendication 1, **caractérisé en ce que** ledit point d'ancrage principal (P1) est situé au centre de l'élément (E7) correspondant.

3. Procédé selon l'une des revendications 1 et 2,
**caractérisé en ce que**, en cas de double intersection entre l'axe central (A2) d'un élément (E2) et la zone d'étiquette (12), on détermine comme point d'ancrage auxiliaire (P2) le point d'intersection qui est situé le plus près longitudinalement du centre dudit élément (E2).

4. Procédé selon l'une des revendications 1 à 3,
**caractérisé en ce qu'**à l'étape d), on présente chaque étiquette horizontalement.

5. Dispositif d'affichage d'au moins une partie d'un aéroport comprenant une pluralité d'éléments (E1 à E7) sur un champ d'affichage (8) d'un écran de visualisation (9), ledit dispositif (1) comportant :
- des premiers moyens (7) pour rechercher l'ensemble des éléments (E1 à E5, E7) de l'aéroport qui sont affichés sur ledit champ d'affichage (8) de l'écran de visualisation (9) ;
- des deuxièmes moyens (10) pour vérifier, pour chacun des éléments (E1 à E5, E7) trouvés par lesdits premiers moyens (7), s'il fait partie :
• d'un premier groupe pour lequel un point d'ancrage principal (P1), associé à l'élément et situé sur ce dernier, se trouve à l'intérieur d'une zone d'étiquette (12) qui est définie à l'intérieur dudit champ d'affichage (8) de l'écran de visualisation (9) ; ou
• d'un second groupe, pour lequel le point d'ancrage principal (P1) associé est situé hors de ladite zone d'étiquette (12) ;
- des troisièmes moyens (13) pour déterminer, pour tous les éléments (E1 à E5, E7) du second groupe, à chaque fois un point d'ancrage auxiliaire (P2) qui est situé au point d'intersection entre un axe central (A1 à A5, A7) dudit élément (E1 à E5, E7) et ladite zone d'étiquette (12) ;
- des quatrièmes moyens (15) pour présenter, sur ledit champ d'affichage (8) de l'écran de visualisation (9), une étiquette (L3 à L5, L7) associée qui comporte des informations relatives audit élément, les étiquettes associées auxdits éléments du premier groupe étant situées au point d'ancrage principal (P1) correspondant, et les étiquettes (L3 à L5, L7) associées auxdits éléments (E1 à E5, E7) du second groupe étant situées au point d'ancrage auxiliaire (P2) correspondant ; et
- un moyen (17) pour désactiver la présentation d'une étiquette associée à un élément (E1), qui est mise en oeuvre par lesdits quatrièmes moyens (15), lorsque l'angle (α) entre l'axe central (A1) dudit élément (E1) et l'horizontale (H) est supérieur à une valeur prédéterminée.

6. Système d'affichage comportant :
- une base (3) de données cartographiques de l'aéroport ;
- des moyens d'actionnement (5) permettant à un opérateur de commander une pluralité de fonctions dudit système d'affichage (2) ; et
- un dispositif d'affichage (1) susceptible d'afficher au moins une partie de l'aéroport sur un écran de visualisation (9),
**caractérisé en ce que** ledit dispositif d'affichage (1) est du type de celui spécifié sous la revendication 5.

7. Aéronef,
**caractérisé en ce qu'**il comporte un dispositif (1) susceptible de mettre en oeuvre le procédé spécifié sous l'une quelconque des revendications 1 à 4.

8. Aéronef,
**caractérisé en ce qu'**il comporte un dispositif (1) tel que celui spécifié sous la revendication 5.

9. Aéronef,
**caractérisé en ce qu'**il comporte un système (2) tel que celui spécifié sous la revendication 6.

## Claims

1. A method of displaying at least one part of an airport comprising a plurality of elements (E1 to E7) on a display field (8) of a viewing screen (9), method according to which the following series of successive steps is carried out in an automatic and repetitive manner:
a) a search is conducted for the set of elements (E1 to E5, E7) of the airport which are displayed on said display field (8) of the viewing screen (9);
b) for each of the elements (E1 to E5, E7) found in step a), a check is carried out to verify whether it forms part:
- of a first group for which a main anchoring point (P1), associated with the element and situated on the latter, lies inside a label zone (12) which is defined inside said display field (8) of the viewing screen (9); or
- of a second group, for which the associated main anchoring point (P1) is situated outside said label zone(12);
c) for all the elements (E1 to E5, E7) of the second group, an auxiliary anchoring point (P2) which is situated at the intersection point between a central axis (A1 to A5, A7) of said element (E1 to E5, E7) and said label zone (12) is determined each time; and
d) for each of the elements (E1 to E5, E7) found in step a), an associated label (L3 to L5, L7) which comprises information relating to said element is presented on said display field (8) of the viewing screen (9), the labels associated with said elements of the first group being situated at the corresponding main anchoring point (P1), and the labels (L3 to L5, L7) associated with said elements (E1 to E5, E7) of the second group being situated at the corresponding auxiliary anchoring point (P2), method according to which furthermore if the angle (α) between the central axis (A1) of an element (E1) and the horizontal (H) is greater than a predetermined value, the presentation of the label corresponding to step d) is removed.

2. The method as claimed in claim 1,
**characterized in that** said main anchoring point (P1) is situated at the center of the corresponding element (E7).

3. The method as claimed in one of claims 1 and 2, **characterized in that**, in the event of double intersection between the central axis (A2) of an element (E2) and the label zone (12), the intersection point which is situated longitudinally nearest the center of said element (E2) is determined as auxiliary anchoring point (P2).

4. The method as claimed in one of claims 1 to 3, **characterized in that** in step d), each label is presented horizontally.

5. A device for displaying at least one part of an airport comprising a plurality of elements (E1 to E7) on a display field (8) of a viewing screen (9), said device (1) comprising:
- first means (7) for searching for the set of elements (E1 to E5, E7) of the airport which are displayed on said display field (8) of the viewing screen (9);
- second means (10) for verifying, for each of the elements (E1 to E5, E7) found by said first means (7), whether it forms part:
• of a first group for which a main anchoring point (P1), associated with the element and situated on the latter, lies inside a label zone (12) which is defined inside said display field (8) of the viewing screen (9); or
• of a second group, for which the associated main anchoring point (P1) is situated outside said label zone(12);
- third means (13) for determining each time, for all the elements (E1 to E5, E7) of the second group, an auxiliary anchoring point (P2) which is situated at the intersection point between a central axis (A1 to A5, A7) of said element (E1 to E5, E7) and said label zone (12);
- fourth means (15) for presenting, on said display field (8) of the viewing screen (9), an associated label (L3 to L5, L7) which comprises information relating to said element, the labels associated with said elements of the first group being situated at the corresponding main anchoring point (P1), and the labels (L3 to L5, L7) associated with said elements (E1 to E5, E7) of the second group being situated at the corresponding auxiliary anchoring point (P2); and
- a means (17) for deactivating the presentation of a label associated with an element (E1), which is implemented by said fourth means (15), when the angle (α) between the central axis (A1) of said element (E1) and the horizontal (H) is greater than a predetermined value.

6. A display system comprising:
- a cartographic database (3) of the airport;
- actuation means (5) allowing an operator to control a plurality of functions of said display system (2); and
- a display device (1) capable of displaying at least one part of the airport on a viewing screen (9),
**characterized in that** said display device (1) is of the type of that specified under claim 5.

7. An aircraft,
**characterized in that** it comprises a device (1) capable of implementing the method specified under any one of claims 1 to 4.

8. An aircraft,
**characterized in that** it comprises a device (1) such as that specified under claim 5.

9. An aircraft,
**characterized in that** it comprises a system (2) such as that specified under claim 6.

## Patentansprüche

1. Verfahren zum Anzeigen mindestens eines Teils eines Flughafens, der eine Vielzahl von Elementen (E1 bis E7) umfasst, in einem Anzeigefeld (8) eines Visualisierungsbildschirms (9), wobei gemäß dem Verfahren automatisch und wiederholt die nachstehende Reihe aufeinanderfolgender Schritte ausgeführt wird:
a) Suchen aller Elemente (E1 bis E5, E7) des Flughafens, die in dem Anzeigefeld (8) des Visualisierungsbildschirms (9) angezeigt werden;
b) für jedes der Elemente (E1 bis E5, E7), die in Schritt a) gefunden werden, Überprüfen, ob es Teil ist:
- einer ersten Gruppe, für die ein Hauptankerpunkt (P1), der mit dem Element verknüpft ist und sich auf letzterem befindet, sich innerhalb einer Etikettenzone (12) befindet, die innerhalb des Anzeigefelds (8) des Visualisierungsbildschirms (9) definiert ist; oder
- einer zweiten Gruppe, für die der verknüpfte Hauptankerpunkt (P1) sich außerhalb der Etikettenzone (12) befindet;
c) für alle Elemente (E1 bis E5, E7) der zweiten Gruppe, jeweiliges Bestimmen eines Hilfsankerpunkts (P2), der sich am Schnittpunkt zwischen einer mittleren Achse (A1 bis A5, A7) des Elements (E1 bis E5, E7) und der Etikettenzone (12) befindet; und
d) für jedes der Elemente (E1 bis E5, E7), die in Schritt a) gefunden werden, Präsentieren in dem Anzeigefeld (8) des Visualisierungsbildschirms (9) eines verknüpften Etiketts (L3 bis L5, L7), das Informationen über das Element umfasst, wobei sich die Etiketten, die mit den Elementen der ersten Gruppe verknüpft sind, am entsprechenden Hauptankerpunkt (P1) befinden und sich die Etiketten (L3 bis L5, L7), die mit den Elementen (E1 bis E5, E7) der zweiten Gruppe verknüpft sind, am entsprechenden Nebenankerpunkt (P2) befinden,
Verfahren, gemäß dem ferner, wenn der Winkel (α) zwischen der mittleren Achse (A1) eines Elements (E1) und der Waagerechten (H) größer als ein vorherbestimmter Wert ist, die die Schritt d) entsprechende Präsentation des Etiketts unterdrückt wird.

2. Verfahren nach Anspruch 1,
**dadurch gekennzeichnet, dass** der Hauptankerpunkt (P1) sich in der Mitte des entsprechenden Elements (E7) befindet.

3. Verfahren nach einem der Ansprüche 1 und 2,
**dadurch gekennzeichnet, dass** im Falle einer doppelten Überschneidung zwischen der mittleren Achse (A2) eines Elements (E2) und der Etikettenzone (12) der Schnittpunkt, der sich längsgerichtet dem Mittelpunkt des Elements (E2) am nächsten befindet, als Hilfsankerpunkt (P2) bestimmt wird.

4. Verfahren nach einem der Ansprüche 1 und 3,
**dadurch gekennzeichnet, dass** in Schritt d) jedes Etikett waagerecht präsentiert wird.

5. Vorrichtung zum Anzeigen mindestens eines Teils eines Flughafens, der eine Vielzahl von Elementen (E1 bis E7) umfasst, in einem Anzeigefeld (8) eines Visualisierungsbildschirms (9), wobei die Vorrichtung (1) folgendes umfasst:
- erste Mittel (7) zum Suchen aller Elemente (E1 bis E5, E7) des Flughafens, die in dem Anzeigefeld (8) des Visualisierungsbildschirms (9) angezeigt werden;
- zweite Mittel (10) zum Überprüfen für jedes Element (E1 bis E5, E7), das von den ersten Mitteln (7) gefunden wird, ob es Teil ist:
• einer ersten Gruppe, für die ein Hauptankerpunkt (P1), der mit dem Element verknüpft ist und sich auf letzterem befindet, sich innerhalb einer Etikettenzone (12) befindet, die innerhalb des Anzeigefelds (8) des Visualisierungsbildschirms (9) definiert ist; oder
• einer zweiten Gruppe, für die der verknüpfte Hauptankerpunkt (P1) sich außerhalb der Etikettenzone (12) befindet;
- dritte Mittel (13) zum Bestimmen für alle Elemente (E1 bis E5, E7) der zweiten Gruppe jeweils eines Hilfsankerpunkts (P2), der sich am Schnittpunkt zwischen einer mittleren Achse (A1 bis A5, A7) des Elements (E1 bis E5, E7) und der Etikettenzone (12) befindet;
- vierte Mittel (15) zum Präsentieren in dem Anzeigefeld (8) des Visualisierungsbildschirms (9) eines verknüpften Etiketts (L3 bis L5, L7), das Informationen über das Element umfasst, wobei sich die Etiketten, die mit den Elementen der ersten Gruppe verknüpft sind, am entsprechenden Hauptankerpunkt (P1) befinden und sich die Etiketten (L3 bis L5, L7), die mit den Elementen (E1 bis E5, E7) der zweiten Gruppe verknüpft sind, am entsprechenden Nebenankerpunkt (P2) befinden; und
- ein Mittel (17) zum Deaktivieren der Präsentation eines mit einem Element (E1) verknüpften Etiketts, das durch die vierten Mittel (15) durchgeführt wird, wenn der Winkel (α) zwischen der mittleren Achse (A1) des Elements (E1) und der Waagerechten (H) größer als ein vorherbestimmter Wert ist.

6. Anzeigesystem, umfassend:
- eine Bank (3) mit kartografischen Daten des Flughafens;
- Betätigungsmittel (5), die es einem Bediener ermöglichen, eine Vielzahl von Funktionen des Anzeigesystems (2) zu steuern; und
- eine Anzeigevorrichtung (1), die in der Lage ist, mindestens einen Teil des Flughafens auf einem Visualisierungsbildschirm (9) anzuzeigen,
**dadurch gekennzeichnet, dass** die Anzeigevorrichtung (1) von der in Anspruch 5 angegebenen Art ist.

7. Luftfahrzeug,
**dadurch gekennzeichnet, dass** es eine Vorrichtung (1) umfasst, die in der Lage ist, das Verfahren durchzuführen, das in einem der Ansprüche 1 bis 4 angegeben wird.

8. Luftfahrzeug,
**dadurch gekennzeichnet, dass** es eine Vorrichtung (1) umfasst, wie sie in Anspruch 5 angegeben wird.

9. Luftfahrzeug,
**dadurch gekennzeichnet, dass** es ein System (2) umfasst, wie es in Anspruch 6 angegeben wird.
